# EUROPEAN PATENT APPLICATION

(11) **EP 1 649 931 A1**
(43) Date of publication of application: **26.04.2006**
(21) Application number: 05021544.1
(22) Date of filing: 30.09.2005
(51) Int. Cl.: B01L 3/00, B01L 7/00, C12Q 1/68, G01N 35/00

(54) **Chemical analyzing apparatus for biological substances**

(30) Priority: 01.10.2004 JP 2004289505
(71) Applicant: Hitachi High-Technologies Corporation, Tokyo (JP)
(72) Inventor: Sasaki, Shigeyuki, Chiyoda-ku Tokyo 100-8220 (JP); Nagaoka, Yoshihiro, Chiyoda-ku Tokyo 100-8220 (JP); Ishimaru, Hirotoshi, Chiyoda-ku Tokyo 100-8220 (JP); Maki, Nobuyuki, Chiyoda-ku Tokyo 100-8220 (JP); Yokobayashi, Toshiaki, 882, Ichige Hitachinaka-shi Ibaraki (JP); Saito, Michihiro, 882, Ichige Hitachinaka-shi Ibaraki (JP); Seino, Taisaku, 882, Ichige Hitachinaka-shi Ibaraki (JP)
(74) Representative: Beetz & Partner

(57) **Abstract**

A chemical analyzing apparatus accommodates therein a structure (2) for retaining a sample and reagents. A detecting mechanism detects the sample after reaction with a reagent. After or during extraction of a biological substance from the sample in the structure (2), a temperature of a fluid in a space (10) around the structure (2) is controlled to a value which is suitable for enzyme.

## Description

### Background of the Invention

The present invention relates to a chemical analyzing apparatus for extracting and detecting a specific chemical substance in a liquid sample.

International Publication WO99/33559 discloses an integral fluid-operative cartridge as an example of a chemical analyzing apparatus for extracting and detecting a specific chemical substance such as nucleic acid in a sample containing a plurality of chemical substances. In this cartridge which includes a capturing component for capturing a reagent such as a solution, a washing or an eluting solvent and nucleic acid, a sample containing nucleic acid filled in the cartridge is mixed with an eluting solvent and is then led through the capturing component while a washing and an eluting solvent are also led through the capturing component, and the eluting solvent having passed through the capturing component is caused to react with a PCR reagent before it is led into a reaction chamber. Further, this publication also disclose heating measures using a thin film heater as a temperature control means.

Further, an International Publication WO00/78455 discloses an apparatus which incorporates a rotary disc for quantifying a sample with the use of a centripetal force and which utilizes a PCR amplifying method for nucleic acid. The rotary disc incorporates therein a temperature control means for setting a degenerative temperature, an annealing temperature and an elongation temperature in the PCR amplifying process.

The prior art disclosed in either of the International Publications W099/33559 and W00/78455 utilizes a nucleic acid amplifying process in the PCR amplifying method with the repetitions of temperature cycling. The above-mentioned PCR amplifying method repeats temperature cycling of, for example, 95 deg.C, 55 deg.C and 72 deg.C so as to amplify nucleic acid in accordance with a cycling number. The above-mentioned prior art documents disclose nothing other than temperature control of a reaction liquid at a desired temperature in view of the above-mentioned temperature cycling. There have not been considered temperature control for enhancing a reaction profile and a temperature control system therefor. Further, there has not been considered temperature control for enhancing a reaction profile during amplification.

### Brief Summary of the Invention

Accordingly, an object of the present invention is to solve at least one of the above-mentioned problems inherent to the conventional chemical analyzing apparatus.

To the end, according to the present invention, there are provided the following configurations:
(1) A chemical analyzing apparatus which receives therein a structure for introducing a sample containing a biological substance, and holding reagents reacting with the sample, and detecting mechanisms for the sample after reaction with the reagents, wherein a fluid around the structure is controlled to an appropriate temperature for the reagent after extraction of a biological substance from the sample in the structure or during the extraction. Specifically, there is provided a chemical analyzing apparatus in which at least one of reagents is the one which contains enzyme, and which comprises a mechanism for extracting a biological substance from the sample, a mechanism for feeding the reagent containing enzyme to the extracted biological substance, and a temperature control mechanism for controlling a temperature of the structure, characterized in that the temperature control mechanism controls the temperature of the structure so as to raise a temperature of the reagent containing enzyme after the step of extracting the biological substance is started but before reaction of the reagent containing enzyme.
   The above-mentioned biological substance is, for example, nucleic acid. There may be considered a biological substance containing DNA, RNA, protein or the like.
(2) A chemical analyzing apparatus as stated in item (2), characterized in that the biological substance fed with the enzyme is maintained at a predetermined temperature for a predetermined time, and the biological substance after being maintained at the temperature is controlled so as to be detected by the detecting mechanism, a temperature of the reagent containing enzyme being controlled at the temperature raising step so as to approach the maintained temperature.
   For example, the predetermined temperature is the maintained temperature such as an optimum temperature which is in general higher than a room temperature. That is, heating is made up to a temperature near the maintained temperature. For example, it may be considered that a difference from the maintained temperature is not greater than about 5 deg.C. Alternatively, a heating temperature by the temperature control mechanism is controlled to a value which is nearer the holding temperature rather than a room temperature.
   The temperature is preferably set to a reaction temperature in a constant temperature nucleic acid amplifying method using an appropriate reaction temperature. The appropriate reaction temperature is preferably in a range around the optimum temperature for enzyme. For example, it is in range of about -5 deg.C to 0 deg.C, or more preferably, - 3 deg.C to 0 deg.C around the optimum temperature of enzyme.
(3) A chemical analyzing apparatus which receives therein a structure for introducing a sample containing a biological substance, and holding reagents reacting with the sample, and which includes a detecting mechanism for the sample after reaction with the reagents, comprising a drive mechanism for rotating the structure, a mechanism for extracting a biological substance from the sample, at least one of the reagents being the one which contains enzyme, a mechanism for feeding the agent containing enzyme to the thus extracted biological substance, and a temperature control mechanism for controlling a temperature of the structure, characterized by a receiving portion accommodating therein the structure, a tank in which the receiving portion is set, a container accommodating the tank and incorporating an opening and closing mechanism, a first temperature control mechanism set in a zone where the structure is accommodated, for controlling a temperature of a zone in which the extracted biological substance is positioned in the structure, and a second temperature control mechanism for controlling a temperature of fluid filled in a space in the tank.
   The fluid filled in the space in the tank is a gas. For example, the gas may be air, or an oxidization retardant such as nitrogen in view of oxidization restraint.
(4) A chemical analyzing apparatus as stated in item (3), in which the biological substance is nucleic acid, characterized in that a temperature of the biological substance and a temperature of fluid in the tank are controlled to a value around the predetermined temperature rather than an external temperature of the apparatus before the biological substance and the reagent containing the enzyme are mixed with each other.
(5) A chemical analyzing apparatus as stated in item (3), in which the biological substance is nucleic acid, characterized in that a temperature of the biological substance and a temperature of the reagent containing enzyme are controlled to a value around the predetermined temperature rather than an external temperature of the apparatus before the biological substance and the reagent containing the enzyme are mixed with each other.
(6) A chemical analyzing apparatus as stated in item (3), in which the biological substance is nucleic acid, characterized in that a temperature of a reaction liquid of the biological substance and the reagent containing enzyme and a temperature of the fluid in the tank are maintained under control by operating the second temperature control means after the biological substance and the reagent containing the enzyme are mixed.

If the temperature is lowered when the reagent containing the enzyme is added to the sample, the amplification of nucleic acid is greatly affected. Thus, there may be built up a system having a stable amplifying step which restrains the reaction characteristic from lowering after mixture of the sample and the reagent while the deterioration of a characteristic of the reagent containing enzyme is effectively restrained.

Further, even though the reaction liquid is evaporated during temperature control, it is possible to restrain a risk of occurrence of such a problem that the reaction liquid is evaporated so as to reduce its volume in the case of local heating as in the conventional technology.

Thereby it is possible to enhance the reaction profile of the chemical analyzing apparatus according to the present invention.

Other objects, features and advantages of the invention will become apparent from the following description of the embodiments of the invention taken in conjunction with the accompanying drawings.

### Brief Description of the Several Views of the Drawing

Fig. 1 is a longitudinal sectional view illustrating a genetic screening apparatus in an embodiment of the present invention;
Fig. 2 is a top view illustrating the genetic screening apparatus shown in Fig. 1;
Fig. 3 is a perspective view illustrating an inspection cartridge;
Fig. 4 is a perspective view illustrating a reagent cartridge as viewed on the rear side thereof;
Fig. 5 is a perspective view illustrating the inspection cartridge excluding the reagent cartridge;
Fig. 6 is a sectional view illustrating the inspection cartridge and the reagent cartridge;
Fig. 7 is a sectional view illustrating the inspection cartridge and the reagent cartridge;
Fig. 8 is a top view illustrating the reagent cartridge;
Fig. 9 is a top view illustrating the inspection cartridge;

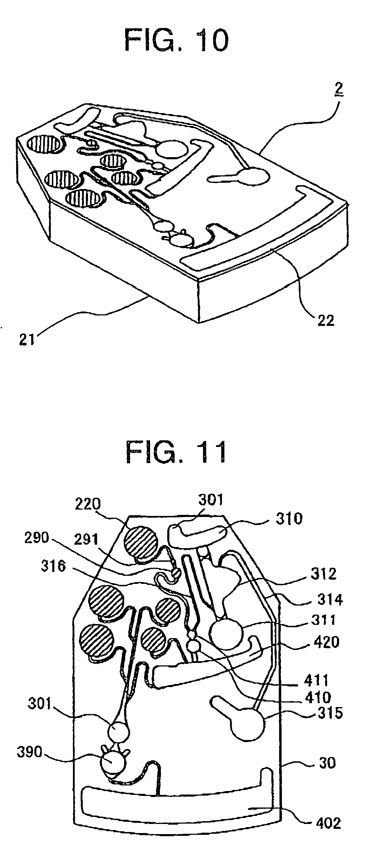

Fig 10 is a perspective view illustrating an inspection module integrally incorporated with a reagent cartridge;
Fig. 11 is a top view illustrating the inspection module shown in Fig. 10;
Fig. 12 is a flow-chart for an inspection process as a one example;
Fig. 13 is perspective view illustrating an inspection cartridge;
Fig. 14 is a sectional view illustrating the inspection cartridge shown in Fig. 13;
Fig. 15 is a sectional view illustrating the inspection cartridge shown in Fig. 13;
Fig. 16 is a sectional view illustrating the inspection cartridge shown in Fig. 13;
Fig. 17 is a sectional view illustrating the inspection cartridge shown in Fig. 13;
Fig. 18 is a sectional view illustrating the inspection cartridge shown in Fig. 13;
Fig. 19 is a sectional view illustrating the inspection cartridge shown in Fig. 13;
Fig. 20 is a sectional view illustrating the inspection cartridge shown in Fig. 13;
Fig. 21 is a sectional view illustrating the inspection cartridge shown in Fig. 13;
Fig. 22 is a sectional view illustrating the inspection cartridge shown in Fig. 13;
Fig. 23 is a view for explaining a partial steam pressure under the atmospheric pressure;
Fig. 24 is a longitudinal sectional view illustrating an inspection apparatus according to the present invention;
Fig. 25 is a longitudinal sectional view illustrating the inspection apparatus in which a temperature is controlled;
Fig. 26 is a longitudinal sectional view illustrating the inspection apparatus in which a temperature is controlled;
Fig. 27 is a longitudinal sectional view illustrating the inspection apparatus in which a temperature is controlled;
Fig. 28 is a longitudinal sectional view illustrating the inspection apparatus in which a temperature is controlled;
Fig. 29 is a longitudinal sectional view illustrating the inspection apparatus in which a temperature is controlled;
Fig. 30 is a flow-chart for another inspection process in an embodiment of the present invention;
Fig. 31 is a view for explaining temperature control for inspection liquid and a centrifugal vessel;
Figs. 32a to 32c are views for explaining temperature control for the inspection liquid and the centrifugal vessel; and
Figs. 33a to 33c are views for explaining temperature control for the inspection liquid and the centrifugal vessel.

### Detailed Description of the Invention

Explanation will be hereinbelow made of a genetic screening apparatus in an embodiment of the present invention with reference to the accompanying drawings. It is noted that the present invention should not be limited to this embodiment but several modifications may be made thereto in view of other well-known technologies within the technical scope of the invention stated in the appended claims.

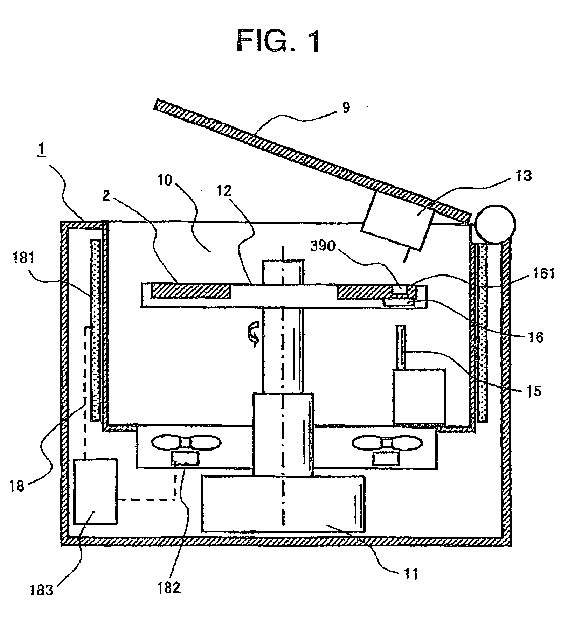

Referring to Fig. 1 which is a longitudinal sectional view illustrating a configuration of a genetic screening apparatus in an embodiment of the present invention, the genetic screening apparatus incorporates therein a retaining disc 12 which is rotatably held by a high speed motor 11 in a cylindrical centrifugal tank 10, a plurality of inspection modules set on the retaining disc 12, a drilling machine 13 for controlling liquid flow, an inspection liquid temperature control device 16 for the module, a temperature control device 18 for the centrifugal tank incorporating therein the retaining disc and an amplification detecting device 15. The inspection liquid temperature control device 16 is capable of controlling a temperature of inspection liquid in an inspection port 390 and is composed of an electric heater. The centrifugal tank temperature control device 18 is composed of an electric heater 181, a circulation fan 182 and a temperature control unit (PID control device in this embodiment) 183 for controlling the heater 181 and the fan 182.

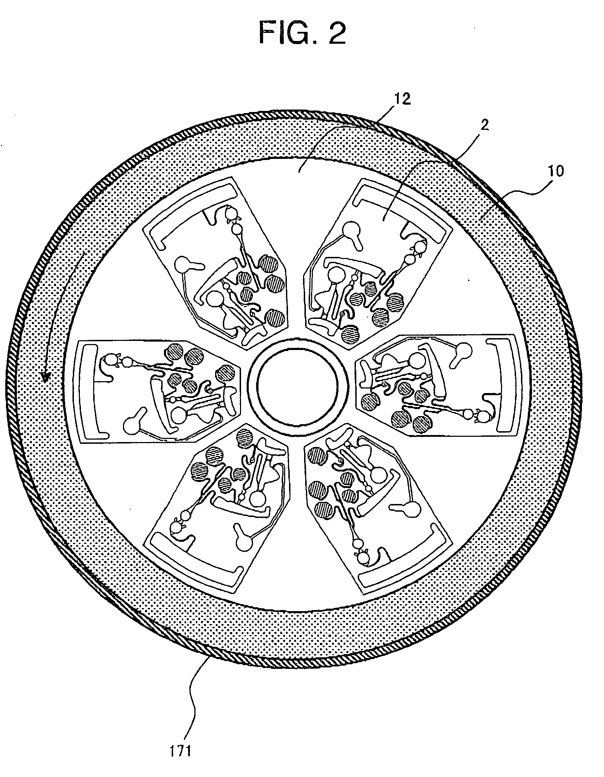

Referring to Fig. 2 which mainly shows the centrifugal tank 10 shown in Fig. 1, as viewed from above thereof with its cover 9 being opened, the retaining disc 12 is set thereon with a plurality of inspection modules 2, concentrically therewith, in the centrifugal vessel.

The operator prepares the inspection modules 2 for every inspection item, and sets them on the retaining disc 12. In the configuration shown in Fig. 2, six inspection modules may be set, and accordingly, six specimens may be inspected simultaneously. The operator then start the operation of the genetic screening apparatus.

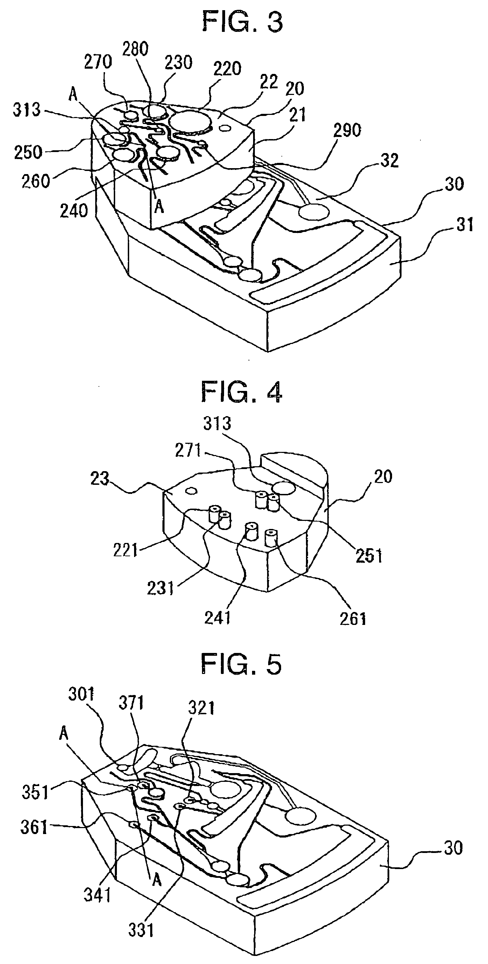

Referring to Fig. 3 which shows the inspection module 2, the inspection module 2 is composed of a reagent cartridge 20 having a reagent cartridge body 21 and a transparent reagent cartridge cover 22 applied thereove, and an inspection cartridge 30 having an inspection cartridge body 21 and a transparent inspection cartridge cover 32 applied thereover, and mounted on the inspection cartridge 30. Reagents are pipetted in containers 220, 230, 250, 260, 270, 280, 290, respectively, by predetermined amounts.

Referring to Fig. 4, reagent outlet ports 221, 231, 241, 251, 261, 271 which are communicated with the reagent containers are provided on the rear surface of the reagent cartridge 20, and are adapted to be connected to reagent inlet ports 321, 331, 341, 351, 361, 371 of the inspection cartridge 30 as shown in Fig. 5 when the reagent cartridge 20 is mounted on the inspection cartridge 30. At the time when the reagent cartridge 20 is mounted on the inspection cartridge 30, the communication of the reagent containers are set up within the inspection cartridge through the intermediary of the reagent outlet ports and the corresponding reagent inlet ports.

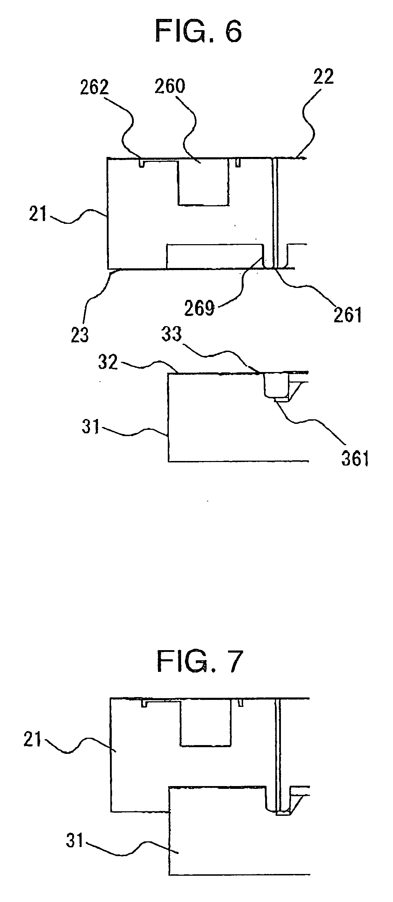

Referring to Fig. 6 which is a longitudinal sectional view along line A-A in Figs. 3 and 5, illustrating principal parts of the reagent cartridge 20 and the inspection cartridge 30, Fig. 7 which is a longitudinal sectional view illustrating the inspection cartridge 30 and the reagent cartridge 20 mounted thereon, corresponding to the above-mentioned line A-A, a reagent cartridge protecting sheet 23 for preventing reagents beforehand accommodated in the reagent cartridge 20 from leaking or evaporating is applied over the lower surface of the reagent cartridge 20, and an inspection cartage protecting sheet 33 for preventing contamination of the interior of the inspection cartridge 30 is applied over the upper surface of the inspection cartridge 30.

The operator peels off the reagent cartridge protecting sheet 23 and the inspection cartage protecting sheet 33, and mounts the reagent cartridge 20 on the inspection cartridge 30. A protrusion (for example, a protrusion 269 shown in Fig. 6) which defines therein a reagent outlet port is fitted in the reagent inlet port so that both cartridges may be positioned and the reagents may be prevented from leaking. Alternatively, an adhesive may be applied to the inspection cartridge cover 32 on which the inspection cartridge protecting sheet is applied, so as to glue the joint surface of the reagent cartridge thereto in order to prevent leakage of the reagents. It is noted that the protrusion (for example, the protrusion 269 shown in Fig. 6) formed on the reagent cartridge may be provided to the inspection cartage.

Explanation hereinbelow made of extraction and detection of virus nucleic acid in the case of using whole blood as a sample, with reference to Figs. 3 to 5. The operator fills the whole blood collected by a vacuum blood-collecting vessel or the like, into a sample container 310 from a sample filling port 301 of the inspection cartridge 30, and after peeling off the reagent cartridge protecting sheet 23 and the inspection cartridge protecting sheet 33, mounts the reagent cartridge 20 on the inspection cartage 30 (Refer to Fig. 3). At this time, the sample filling port 301 of the inspection cartridge 30 is blocked by the reagent cartridge 20, the sample does never thereafter leak from the inspection cartridge 30. Alternatively, the reagent cartridge 20 may be formed therein with a sample ventilation hole 313, piercing therethrough (Refer to Figs. 2 and 3) while a filter through which the sample and mist are not permeable but air is permeable is fitted therein in order to effect ventilation during sample flow.

After the thus assembled inspection modules 2 are set on the retaining disc 12 shown in Fig. 1 by a required number, the genetic screening apparatus 1 is operated so as to extract virus genes from the whole blood, thereby it is possible to finally detect the genes by way of an amplifying step.

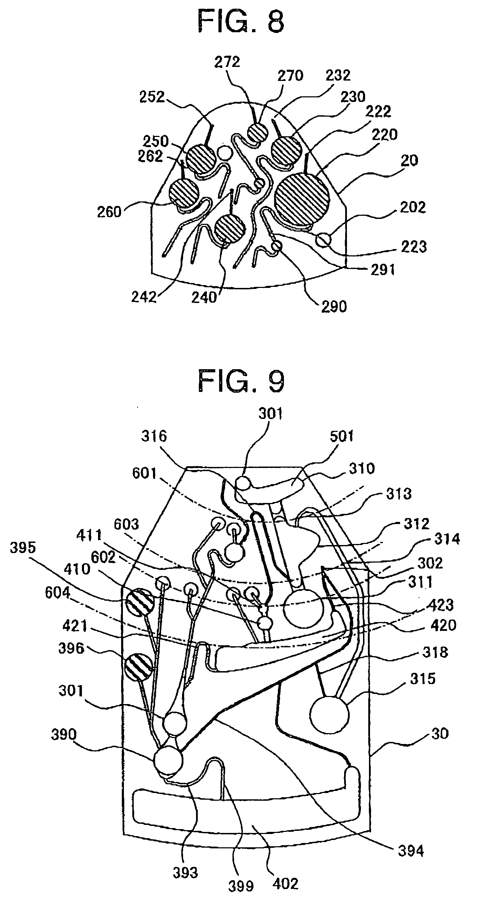

Explanation will be made of liquid flow during operations of components in the genetic screening apparatus 1 with reference to Figs. 8 and 9. After filling the whole blood 501 in the sample filling port 301, the retaining disc 12 is rotated by the motor 11. The whole blood filled in the sample container 310 flows toward the outer periphery of the retaining disc 12 under a centrifugal force induced by the rotation of the disc 12, and then fills a blood cell storage container 311 and a blood serum quantitative container 312 while the whole blood in excess flows into a whole blood discard container 315 from a thin overflow passage 313 through a large overflow passage 314. The whole blood discard container 315 is connected thereto with a whole blood discarding ventilation passage 318 through which air may fleely flow into and from the whole blood discard container 315 by way of the inspection cartridge ventilation hole 302 and the reagent cartridge ventilation hole 202. A connection from the thin overflow passage 313 to the large overflow passage 313 is steeply enlarged and is located at the innermost periphery (at a diametrical position 601) of the large overflow passage 313. The whole blood is cut off in the connection after the thin overflow passage 313 is filled. Thus, no liquid can be present on the inner peripheral side of the diametrical position 601, the liquid level in the blood serum quantifying container is set to the diametrical position 601. Further, the whole blood also flows into a blood serum capillary tube 316 which branches from the blood serum quantifying container 312, and in which the innermost periphery of the whole blood is set to the diametrical position 601.

Further, through the continuous rotation, the whole blood is separated (centrifugal separation) into blood cells 501 and blood serums or plasmas (which will be hereinbelow referred to "blood serum"), and the blood cells are shifted into the blood cell storage container 311 located at the outer peripheral side, and accordingly, only the blood serums 503 are left in the blood serum quantifying container 312.

Through the above-mentioned successive steps of serration for the blood serums, ventilation holes 222, 232, 242, 252, 262, 272 of the reagent containers in the reagent cartridge 20 shown in Fig. 8, are covered by the reagent cartridge cover 22 (Refer to Fig. 5) so that no air cannot flow thereinto. Although the reagents have a tendency of flow-out from the outer peripheral side of the reagent containers, they cannot flow out since no air flows into the containers so that pressure in the reagent containers becomes lower, resulting in equilibrium with the centrifugal force so that the reagent cannot flow out. Thus, due to an increase in the rotational speed, the greater the centrifugal force, the lower the pressure in the reagent container, when the pressure in the reagent container becomes not higher than a saturated vapor pressure of a reagent in the container, air bubbles are generated. Thus, as shown in Fig. 9, a reagent in each of the reagent containers is restrained from lowering its pressure by the provision of such a passage configuration that a reagent flowing out from the outer peripheral side of the container is once returned to the inner peripheral side thereof (that is, for example, a return passage 223), resulting in prevention of generation of air bubbles. Thus, during separation of the blood serum, the reagent is held in the reagent container as it is with no flow.

When the blood serum separation is completed after rotation by a predetermined time, the inspection module 2 is stopped, and the blood serums 503 in the blood serum quantifying container carries out in part capillary flow in the blood serum capillary tube 316 under surface tension, and accordingly, the blood serums come to an inlet port 411 of a mixing portion 410, which is a connection between the mixing portion 410 and the blood serum capillary tube 316, and fill in the capillary tube 315. Subsequently, the drilling machine 13 makes a hole in ventilation holes upstream of the reagent containers one by one, and the motor 11 is rotated so as to cause the reagents to flow under centrifugal force.

Explanation will be hereinbelow made of operation steps after the blood serum separation. A solution container 220 is pipetted therein with a solution 521 for solving membrane protein of virus in the blood cells. After the drilling machine 13 drills to open a solution ventilation hole 222, when the motor 11 is rotated, the solution 521 flows under centrifugal force from the solution container 220 into an internal control container 29 by way of a solution return passage 223 and a moisture adsorbent 291, and then the solution is mixed with an internal control 290 while it flows into the mixing portion 410. The internal control is a synthetic substance containing therein nucleic acid or the like and is preferably held in a freeze-dried condition in order to be preserved for a long time. Thus, when the solution flows into the internal control container 290, it dissolves the internal control 560 so as to be mixed therewith, and then flows out from the container.

The moisture absorbent 291 which is provided between the solution container 220 and the internal control container 290, is adapted to prevent the internal control 590 from absorbing moisture from the solution 521. A silica gel structure, a fine passage structure such as porous or fibrous filter made of materials other than silica gel, or protrusions formed by etching, machining or the like and made of silicon, metal or the like, may be used as the moisture absorbent.

Further, since the innermost peripheral side (a radial position 601 upon completion of the blood serum separation)of the blood serums in the blood serum quantifying container 312 is located on the inner peripheral side from the inlet port 411 of the mixing portion (a radial position 602), due to a head difference under a centrifugal force, the blood serums in the blood serum quantifying container 312 and the blood serum capillary tube 316 flow into the mixing portion 410 through the inlet port 411 thereof and is simultaneously mixed with the solution which has dissolved the internal control in the mixing portion 410. The mixing portion 410 is formed of a member capable of mixing the blood serums and the solution, such as a porous of fibrous filter made of resin, glass, paper or the like or protrusions formed by etching, machining or the like and made of silicon or metal.

The blood serum and the solution are mixed in the mixing portion 410 and then flows into the reaction container 420 which is provided thereto with a ventilation passage 423 by way of which air may freely flows into and from the reagent cartridge ventilation hole 202 through the inspection cartridge ventilation hole 302. Since a branch portion 317 (a radial position 603) from the blood serum quantifying container 312 to the blood serum capillary tube 316 is located on the inner peripheral side from the inlet port 411 (the radial position 602), all blood serum in the blood serum capillary tube 316 flows into the mixing portion 410 due to a siphon effect. Meanwhile, the blood serum flows into the blood serum capillary tube 316 from the blood serum quantifying container 312 under a centrifugal force, and accordingly, the blood serums continuously flow into the mixing portion 410 until the liquid level of the blood serums in the blood serum quantifying container 312 comes to the branch portion 317 (the radial position 603). At the time when liquid level of the blood serums comes to the branch portion 317, air flows into the capillary tube 316 which therefore empties, so as to stop the flow of the blood serums. That is, all blood serum in the blood serum quantifying container 312, the overflow fine passage 313 and the blood serum capillary tube 316 between the radial position 601 and the radial position 603 at the time of completion of the separation of the blood serums flows into the mixing portion 410, and is mixed with the solution.

Thus, by designing the blood serum quantifying container 312, the overflow fine passage 313 and the capillary tube 316 between the radial position 301 and the radial position 603 so as to have a predetermined volume (a required blood serum quantity), the blood serums adapted to be used for analysis may be quantified even thought the rate between the blood serums and the whole blood is different among samples of whole blood. For example, in such a design that the capacity of the blood cell storage container is 250 micro liters and the required quantity of blood serums is 200 micro liters, by pippetting a 500 micro liters of whole blood, the whole blood overflows into the whole blood discard container 315 by 50 micro liters while the remaining 450 micro liters of the whole blood is separated into blood serums and blood cells, and of the separated blood serums, not less than 200 micro liters thereof flow into the mixing portion 410. That is, of 450 microliters of the whole blood, not less than 200 micro liters of blood serums may be analyzed by the apparatus in this embodiment of the present invention. As to whole blood having a small rate of blood serums, the blood cell storage container having a larger capacity may be used in order to increase the quantity of the whole blood.

The blood serums and the solution mixed in the reaction container 420 react with one another. After the mixture of the blood serums and the solution flows into the reaction container 420, the liquid level in the reaction container 420 is positioned on the outer peripheral side from the innermost peripheral part (a radial position 604) of a reaction liquid passage, and accordingly, it cannot go over the innermost peripheral part of the reaction liquid passage 421. Thus, the mixture is retained in the reaction container 420 during rotation.

The solution dissolves membranes of virus, germs and the like in the blood serums so as to elute nucleic acid, and further, promotes adsorption of the nucleic acid to a nucleic binding member 301. Similarly, it promotes adsorption of the dissolved internal control 590 to the nucleic acid binding member 301. As to the above-mentioned reagent, there may be used guanidine hydrochloride for elution and adsorption of DNA, and guanidine thiocyanate for RNA, and as to the nucleic acid binding member, there may be used quartz, porous materials, a fibrous filter or the like.

After the blood serums and the solution are retained in the reaction container 420, the motor 11 is stopped, and a hole for feeding air into an additive solution container 230 is formed in the additive solution ventilation hole 232 by the drilling machine 13. Further, when the motor 11 is again rotated, additive liquid 531 flows under a centrifugal force into the reaction container 420 from the additive liquid container 230 by way of an additive liquid return passage 233 so as to shift the liquid level of the mixture in the reaction container 420 toward the inner peripheral side thereof. When the liquid level comes to the innermost peripheral part (the radial position 604) of the reaction liquid passage 421, the mixture flows over the innermost peripheral part, and into the nucleic acid binding member 301 by way of a merging passage 701. As to the additive liquid, there may be used, for example, the above-mentioned solution.

It is noted that a certain sample has high wettability so as to possibly cause the mixture to flow in the reaction liquid passage 421 under capillary action in a static condition. In this case, no additive liquid 531 is required.

When the mixture of the solution and the blood serums has passed through the nucleic acid binding member, the target nucleic acid and the nucleic acid as the internal control adsorb to the nucleic acid member 301 while the remaining solution flows into an inspection port 390 serving as an eluent recovery container.

The inspection port 390 is formed therein with a ventilation passage 394 for a solution recovery container, and accordingly, air may fleely flow into and from the reagent cartridge ventilation hole 202 through the inspection cartridge ventilation hole 302. Waste liquid 391 after passing through the nucleic binding member 301 is once retained in the eluent recovery container 390 before it flows into a waste liquid recovery container 390 similar to the mixing container 420. However, since the capacity of the eluent recover container 390 is sufficiently smaller than the quantity of the waste liquid, the waste liquid flows over the innermost peripheral side of the waste liquid return passage 393, and then flows into a waste liquid storage 402 by way of the waste liquid return passage 393.

Then the motor 11 is stopped, and a hole for feeding air into a first washing liquid container 240 is formed in a first washing liquid ventilation hole 242 by the drilling machine 13. Thereafter, when the motor is again rotated, the first washing liquid flows from the first washing liquid container 240 into the nucleic binding member 301 by way of the first washing liquid return passage 243 and a merging passage 701 so as to wash out unnecessary components such as protein and the like sticking to the nucleic binding member 301. As to the first washing liquid, for example, the above-mentioned solution or a liquid obtained by decreasing the slat level of the solution may be used.

The waste liquid after the washing, flows into the waste liquid container 402 by way of the eluent recovery container 390, similar to the above-mentioned mixture.

Similar washing steps are repeated by several times. For example, in succession to the first washing liquid, a hole for feeding air into a second washing liquid container 250 is formed in a second washing liquid ventilation hole 252 by the drilling machine 13 in a condition in which the motor is rested, and then, the motor 11 is rotated so as to wash out unnecessary components such as salt sticking to the nucleic acid binding member 301. As to the second washing liquid, ethanol or an ethanol solution may be used.

Similarly, a cover for a third washing liquid ventilation hole 262 is drilled in order to feed air into a third washing liquid container 260. The third washing liquid flows, direct into the eluent recovery container 390 so as to wash out components such as salt sticking to the eluent recovery container 390. As the third washing liquid, there may be used water or an aqueous solution having a pH which is conditioned to 7 to 9, for eluting the nucleic acid from the nucleic acid binding member 301.

Thus, after the nucleic acid binding member 301 and the eluent recovery container 390 are washed, the process of eluting the nucleic acid is carried out.

That is, in such a condition that the motor 11 is rested, the eluent ventilation hole 272 for feeding air into the eluent recovery container 270 is drilled by the drilling machine 13, and then the motor 11 is rotated so as to cause the eluent 571 to flow. The eluent is the one for eluting the nucleic acid from the nucleic acid binding member 301, which may be water or an aqueous solution having a pH which is conditioned to 7 to 9. The liquid from which the nucleic acid is eluted has a liquid quantity which is smaller than the capacity of the eluent recovery container 390 so that it cannot flow over the innermost peripheral side of the water liquid return passage 393, and accordingly, it is retained in the eluent recovery container.

Next, a nucleic acid amplifying and detecting process is carried out.

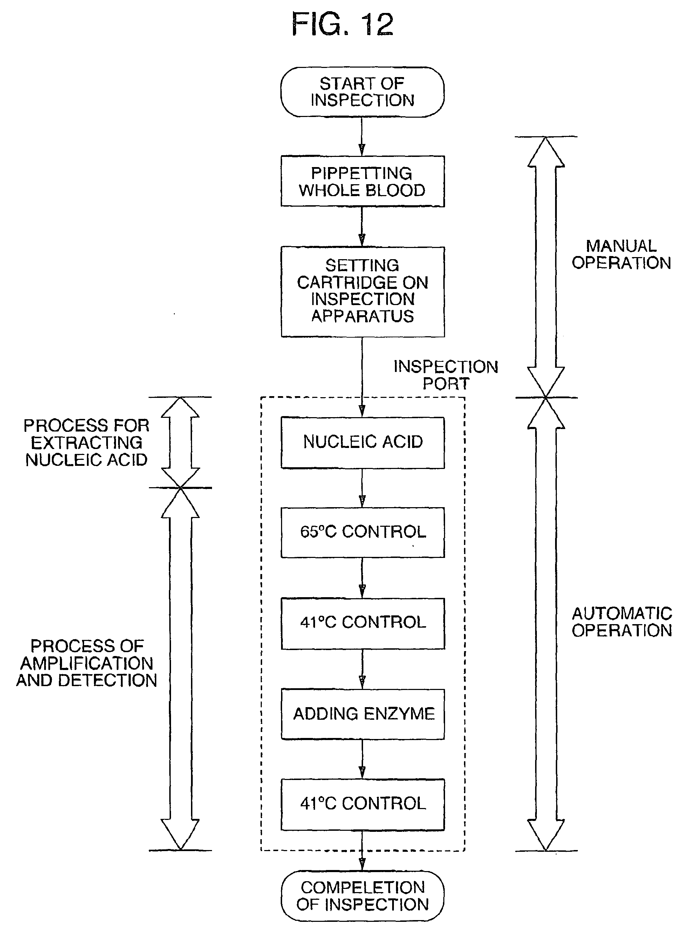

Fig. 12 shows an inspection method in which a Nucleic Acid Sequence-based Amplification (NASBA) process which is one of constant temperature nucleic acid amplification processes is used in the genetic screening apparatus according to the present invention. In the detecting and amplifying process, an inspection liquid which contains a specimen sample in the inspection port 390 is added thereto with an amplifying liquid and enzyme, and then is maintained for a predetermined time at a predetermined temperature so as to amplify the nucleic acid. Simultaneously, the detection is made in such a way that the an detection optical barrel 151 in a detection device 15 is displaced to a position capable of observing the inspection liquid in the inspection port 390, and accordingly, a fluorescence emission quantities of the target nucleic acid and the internal control nucleic acid are detected. The intern control is a substance which has previously contained a predetermined quantity of nucleic acid or a synthetic substance containing nucleic acid, and which carries out extraction, amplification and detection with the use of the same reagents, cartridges and inspection devices as those for extraction, amplification and detection of the target nucleic acid in the blood serum. Thus, whenever the steps of extraction, amplification and detection may be normally functioning, predetermined signals as to a predetermined fluorescent value, a light absorption value and the like may be detected from the internal control. On the contrary, if the intensity of a signal is low so as to cause no detection, there may be understood that any abnormality is caused in any of the steps of extraction, amplification and detection due to a deficiency in any of the reagents, the cartridges, the inspection device and the like. Alternatively, by comparing a detection signal of the target nucleic acid with a detection signal of a previously quantified internal control, a density of the target nucleic acid may be quantified and evaluated.

From the time of completion of the extraction of the nucleic acid, the temperature control of the centrifugal tank 10 is started in order to raise the temperature of the air in the centrifugal tank 10 up to a temperature of an enzyme optimum temperature which is a second optimum temperature, It is noted here that the temperature does not have to soon rise up to the optimum temperature such as, 41 deg.C.

Next, since the extracted nucleic acid is present in the inspection port 390, an amplifying liquid 580 which has been enclosed in the inspection cartridge 30 is introduced into the inspection port 390 after a hole is formed in the amplifying liquid container 395 and the motor is rotated. The amplifying liquid is a reagent for amplifying and detecting the nucleic acid, which contains a fluorescence reagent or the like, in addition to deoxynucleoside triphosphate.

Further, the inspection liquid temperature control device 16 is started to carry out such control that the temperature of the inspection liquid is set to a degenerative temperature under a first reaction, that is, for example, 65 deg.C. After maintaining at 65 deg.C for 5 min., the temperature is then controlled to be set at 41 deg.C which is an optimum enzyme temperature under a second reaction. After holding at this temperature also for 5 min., the enzyme container is formed therein with a hole while the retaining disc 12 is rotated, and enzyme 595 is added into the inspection port 390. Since lowering of the temperature of the liquid just after the addition of the enzyme would affect the amplification of the nucleic acid, the lowering of the temperature should be prevented as far as possible. Thus, as stated above, the temperature of the environment around the cartridge have bee previously heightened by the temperature control device in the centrifugal tank 10 upon the addition of the enzyme, the inspection liquid and the reagent may be maintained substantially at the first reaction temperature of 41 deg.C at which they are mixed without lowering the temperature.

Further, in a steady-state at 41 deg.C in a 90 min., the amplification of the nucleic acid is progressed, and accordingly, the degree of amplification of the nucleic acid may be detected simultaneously by detecting a fluorescence emission quantity. With the use of two kinds of reagents having different wavelengths, the nucleic acid may be quantified on a real time base by comparing fluorescence emission quantities of the nucleic acid of the specimen and the internal control with each other.

Further, by enabling the temperature control device for the inspection port to control the temperature to 65 deg.C, temperature control can be carried out by the respective heating means with a high degree of accuracy within a short time. Up to the step of mounting the inspection cartridge, the manual operation has to be made, but thereafter, the steps from the extraction of the nucleic acid to the amplification thereof may be fully automated. Thus, the configuration shown in Fig. 1 incorporates the temperature control device 16 for the inspection port and the centrifugal tank temperature control 18.

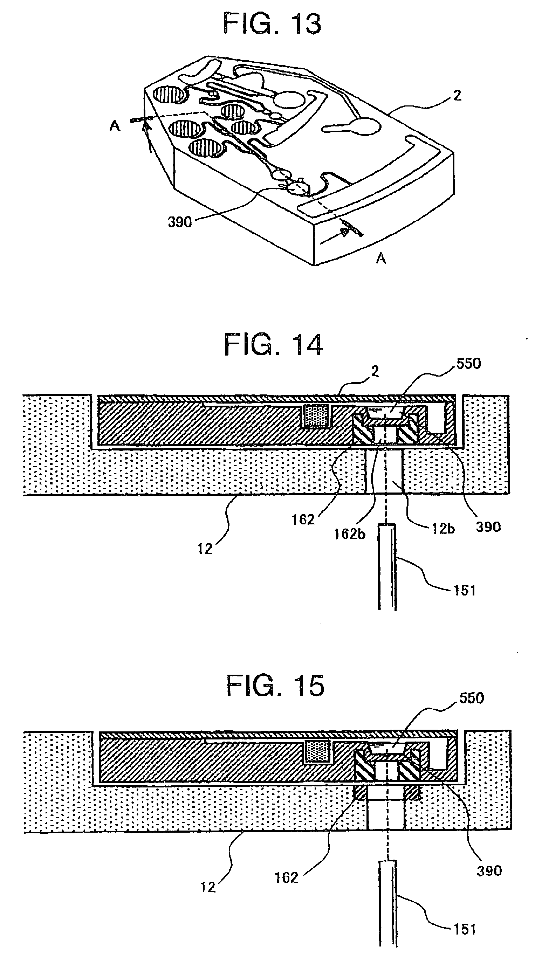

Explanation will be hereinbelow made of the temperature control device in the inspection port with reference to Figs. 13 to 22 in which Fig. 13 is a sectional view along A-A which shows the retaining disc 12 and the inspection cartridge 2 in embodiments shown in Figs. 14 to 22. In the embodiment shown in Fig. 14, an inspection cartridge 2 incorporating a heater 162 for the temperature control of the inspection liquid 550 is used, and the heater 162 is energized for heating by way of a power feeder which is not shown. Due to the cartridge having a heating means, it is possible to prevent unevenness caused by a thermal resistance of contact between the heating portion and the outer wall of the inspection port 390 so as to carry out stable temperature control. In this case, in order to measure a fluorescence emission quantity in the inspection port 390 with the use of the detection optical barrel 151, it is required that the heater 162 and the retaining disc are formed therein respectively with holes 162b, 12b through which the inside of the inspection port 390 may be optically observed.

Further, in another embodiment of this configuration shown in Fig. 15, a heater 162 is incorporated in the retaining disc 2 which is to be rotated. With this configuration, since the heating portion may be separated from the cartridge, the carriage which may be discarded may has an inexpensive configuration.

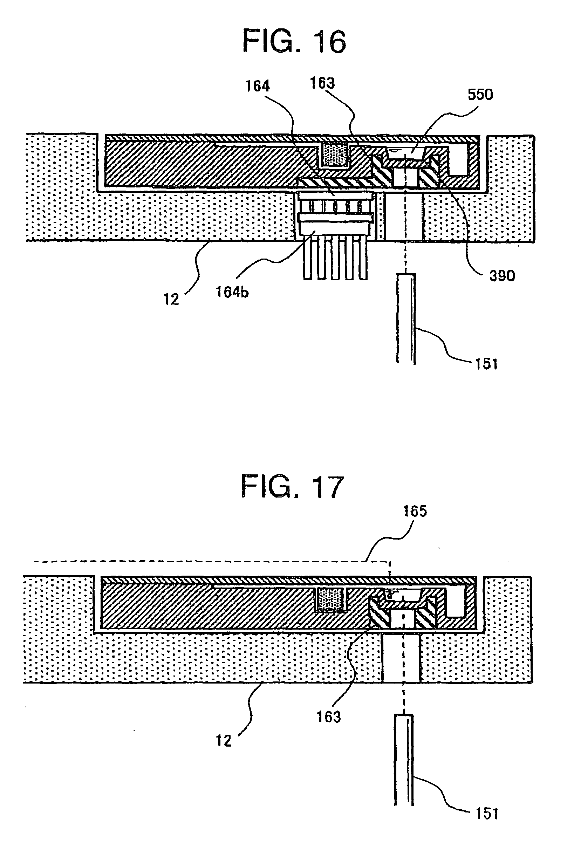

In a configuration shown in Fig. 16, which is further another embodiment, a Peltier element 164 is used for the temperature control of the inspection liquid 550. The wall of the inspection port 390 in which the inspection liquid 550 is reserved is thermally connected to the heat block 163. By changing the value of current applied to the Peltier element 164, the heating value may be controlled, and by alternating the current between a positive polarity and a negative polarity, the temperature may not only be raised but also be lowered. Thus, the temperature control for lowering the temperature from 65 deg.C down to 41 deg.C can be made in a short time. It is noted that reference numeral 164b denotes a heat absorbing portion fot the Peltier element.

In the configuration shown in Fig. 17 which is further another embodiment, a temperature monitor element 165 is set in the inspection liquid 550. By setting a thermocouple, a thermistor or a platinum resistor which is coated over its thermo-sensing surface with a substance which does not hinder the amplification of the nucleic acid, directly in the inspection liquid, for measurement, a temperature of the inspection liquid may be measured and controlled with a high degree of accuracy. Further, even though a washing device for the temperature sensing element 165 is incorporated in the inspection device so as to repeat measurement and washing for every inspection, an object of this embodiment can be achieved.

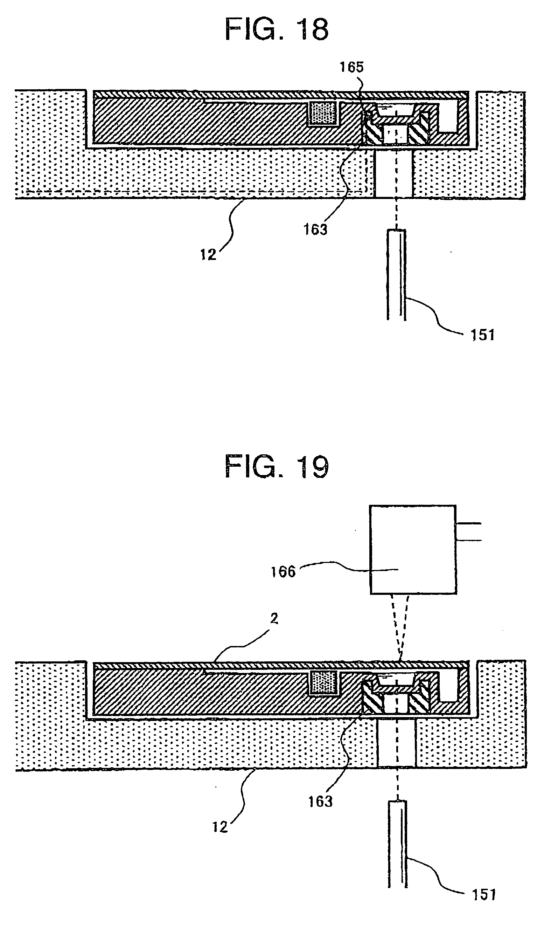

In a configuration shown in Fig. 18, which is further another embodiment, the above-mentioned temperature sensor 165 is incorporated in the heat block 163 wrapping the inspection container. With this configuration, the temperature measurement can be made without replacement of the temperature sensor with new one, thereby it is possible to constitute an inexpensive configuration. In a configuration shown in Fig. 19, which is further another embodiment, an infrared radiation thermometer 166 is used to measure the outer surface of the cartridge 2. With this configuration, the measurement of the liquid may be made without making contact with the retaining disc 12 on rotation. In this case, a difference between the temperature of the inspection liquid and a temperature of the outer surface of the cartridge has be beforehand measured and grasped.

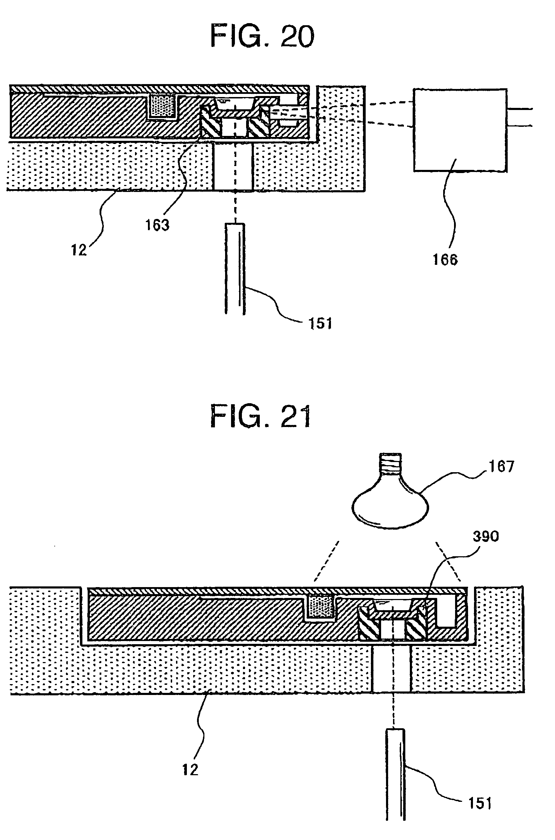

In a configuration shown in Fig. 20, which is further another embodiment, the same infrared thermometer 166 as that shown in Fig. 19 is used to monitor a temperature of the heat block 163 wrapping the inspection port 390. With this configuration, the heat block 16 has been coated beforehand thereover with a black paint having a high radiation rate so as to regulate the radiation rate, and accordingly, the infrared radiation temperature measurement can be made with a relative high degree of accuracy. Further, although explanation has been made of the use of the infrared thermometer in the embodiments shown in Figs. 19, 20, there may be used a temperature measuring method in which an image of a cartridge which is coated thereover with thermosensitive liquid crystal is picked up by a CCD camera or the like and is then processed so as to measure a temperature.

In a configuration shown in Fig. 21, which is further another embodiment, an infrared lamp 167 is used for heating. In this case, the heating may be made without making contact with the retaining disc 12 on rotation. It is noted that the irradiation by the infrared lamp is interrupted in order to prevent occurrence of any affection upon the detection of fluorescence when the fluorescence measurement is made by the optical detection barrel 151.

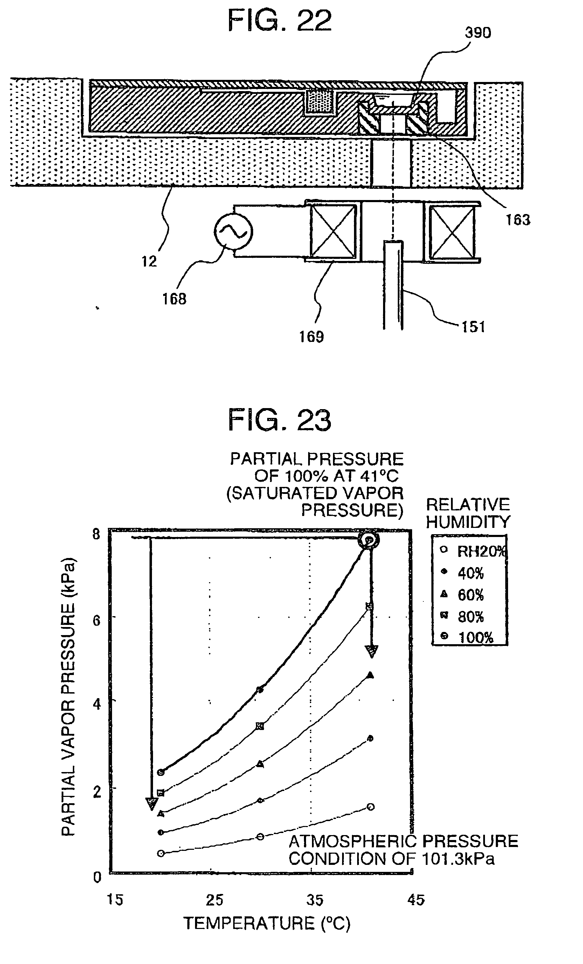

In a configuration shown in Fig. 22, which is further another embodiment, heating is made by electromagnetic induction. A metal heat block 163 having a predetermined electrical resistance is arranged around the inspection port 390, and by energizing a coil 169 connected to an A.C. power source 168, eddy currents run through the heat block 163 under electromagnetic induction so that the heat block 163 may be heated by a Joule heat. The heating value may be controlled in accordance with an intensity of an A.C. current and a distance between the coil 169 and the heat block 163, and accordingly, the heating can be controlled without making contact with the retaining disc 12 on rotation. In this case, the retaining disc 12 is preferably made of nonconductive materials. Further, in the configuration shown in Fig. 22, a microwave oscillating device (magnetron) may be used, instead of the coil 169, in order to induce vibration of water molecules in the inspection liquid 550 so as to directly heat the inspection liquid. With this method, the technical effects and advantages of the present invention may be achieved.

Next, Fig. 23 shows temperature variation, in general, v.s. partial vapor pressure of moist air under the atmospheric pressure. Evaporation is caused in the inspection port 390 at the optimum enzyme temperature of 41 deg.C under control during the amplification of the nucleic acid, and accordingly, it may be considered that the relative humidity is 100 %. Thus, it is likely to induce evaporation which is diffusion caused by a difference in partial vapor pressure between an air ventilation hole opened to the inspection cartridge 2 and the surrounding air, as a drive source. The evaporation likely causes the detection of fluorescence emission quantity to be difficult due to an insufficient quantity of the inspection liquid, and also likely causes a temperature distribution within the inspection liquid due to thermal equilibrium at a gas-liquid interface of the inspection liquid. Further, vapors from the evaporated inspection liquid is condensed at the inner surface of the inspection cartridge 32 so as to cause variation in the concentration of the inspection liquid.

Thus, as shown in Fig. 23, during the control for the optimum temperature, the temperature of the air surrounding the inspection cartridge 2 is raised in comparison with a room temperature. Accordingly, a difference in partial vapor pressure may be decreased, thereby it is possible to prevent evaporation of the inspection liquid 550. Thus, as shown in Fig. 1, a heat control means is incorporated in the centrifugal tank 10. By controlling the temperature in the centrifugal tank 10 so as to set to a value around the second reaction liquid temperature, it is possible to prevent both deactivation of the enzyme and evaporation of the inspection liquid from the inspection module. Further, by controlling the temperature of the inspection liquid through its surroundings, both temperature distribution and concentration distribution may be reduced. Further, errors in measurement caused by deviation of the temperature of the inspection liquid may be decreased.

Next, explanation will be made of temperature control for the air in the centrifugal tank 10. In the configuration shown in Fig. 1, the membrane-like rubber heater 181 is used as the heating means in the centrifugal tank 10 with the use of a metal part of the centrifugal tank as a heat transmission area in order to enhance the heat-exchanging efficiency due to a wide heat transmission area. It is noted that a coil-like heater may be used being wound around the outer periphery of the centrifugal tank.

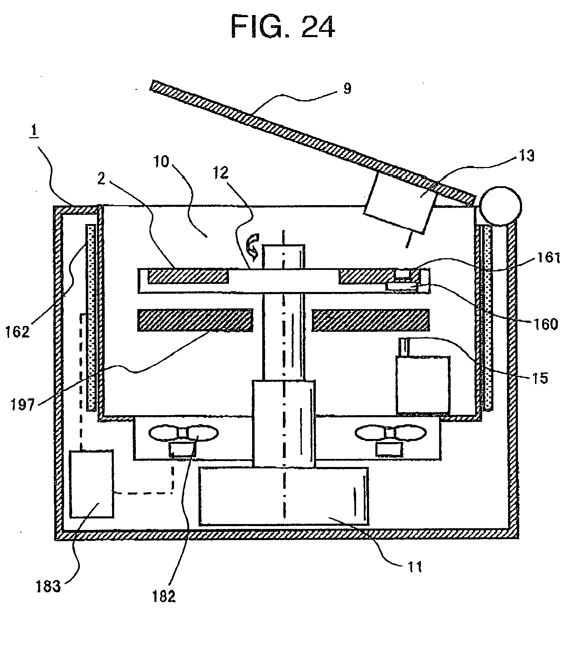

In a configuration shown in Fig. 24, a stationary constant temperature disc 197 is additionally incorporated in the embodiment shown Fig. 1, which is arranged with a predetermined space to the retaining disc 12. The constant temperature disc has been beforehand heated up to a predetermined temperature by means of a heater of the like which is not shown, and when the rotatable retaining disc 12 is rotated, air convention is induced in the centrifugal tank 10 so as to promote heat transfer from the constant temperature disc 197 to the retaining disc 12. With this configuration, the temperature control may be rapidly made due to the rotation of the disc. Further, by reversing the temperature level between of both discs, that is, circulating cold water through the constant temperature disc, the temperature of the retaining disc may be lowered in a short time.

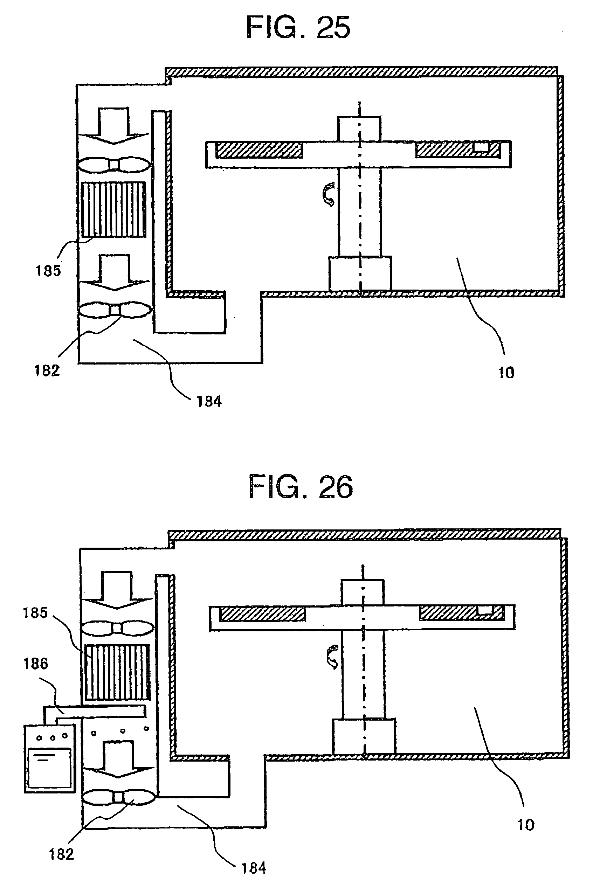

In a configuration shown in Fig. 25, the temperature control means in the centrifugal tank 10 comprises an air flow passage 184 arranged outside of the centrifugal tank 10 in order to allow the air to flow in the centrifugal tank 10 while the air is heated by a heater 185 so as to repeat the circulation. With this configuration, the velocity of the air around the heater may be increased so as to effect high forced convention heat transfer in order to enhance the heat-exchanging efficiency, thereby it is possible to decrease the heater capacity. In a configuration shown in Fig. 25, which is further another embodiment, a humidifier 186 is added in the configuration shown in Fig. 25 in order to effect a humidifying function. With this configuration, by increasing the humidity in the centrifugal tank 10, it is possible to further prevent evaporation of the inspection liquid as indicated by the partial vapor pressure characteristics shown in Fig. 23.

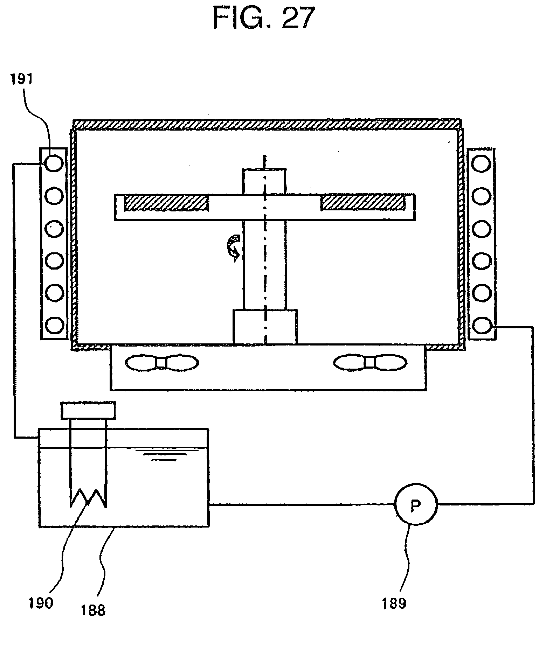

In the embodiment shown in Fig. 27, which is further another embodiment, a hot water circulation system is used as the heating means in the centrifugal tank 10. That is, a hot water coil 191 is wound around the outer periphery of the centrifugal tank 10 so as to enable hot water to circulate therethrough. By circulating hot water which is maintained at a constant temperature in a constant temperature bath 188, through the coil 191 under operation of a pump 189, the temperature in the centrifugal tank 10 may be accurately stabilized at a constant value.

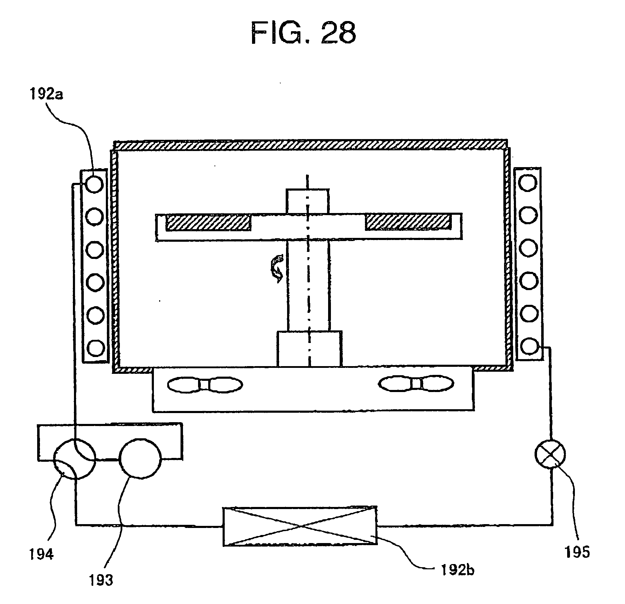

In a configuration shown in Fig. 28, the centrifugal tank 10 is heated through a refrigerating cycle. The refrigerating cycle is composed of a condenser pipe 192a and an evaporator coil 192b attached to the centrifugal tank 10, a compressor, a four-way valve and an expansion valve as required components. The compressor is rotated in a condition in which chlorofluorocarbon gas is charged in the refrigerating cycle while the expansion valve is opened to an appropriate opening degree so as to heat the centrifugal tank 10 with superheated gas and condensate discharged from the compressor at a high temperature. It is noted that the coil 192 may be used as a low temperature evaporation coil while the coil 192b may be used as a high temperature condenser coil by changing the direction of the refrigerant through the changeover of the four-way valve. In this case, with the combination of a rotational speed of the compressor and an opening degree of the expansion valve, the temperature may be freely changed.

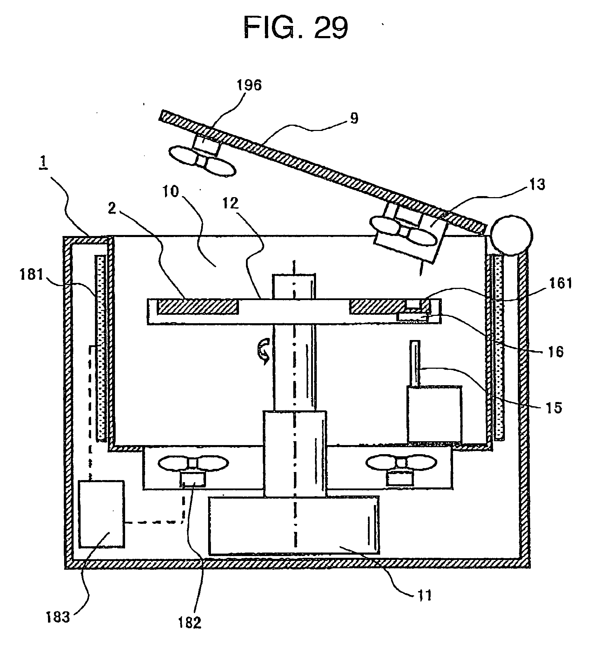

In an embodiment shown in Fig. 29, a blower 196 is incorporated on the top of the cover 9 of the centrifugal tank 10, in addition to the configuration of the embodiment shown in Fig. 1. With this configuration, the circulation of the air in the centrifugal tank is promoted so as to decrease the temperature distribution in the centrifugal tank. It is noted that although the blower 196 is exposed into the centrifugal tank 10 as shown in Fig. 29, a cover may be used to prevent air disturbance caused by air convention due to high speed rotation of the retaining disc 12. It is desirable to effectively allow heat from the heater 181 to reside in the centrifugal tank.

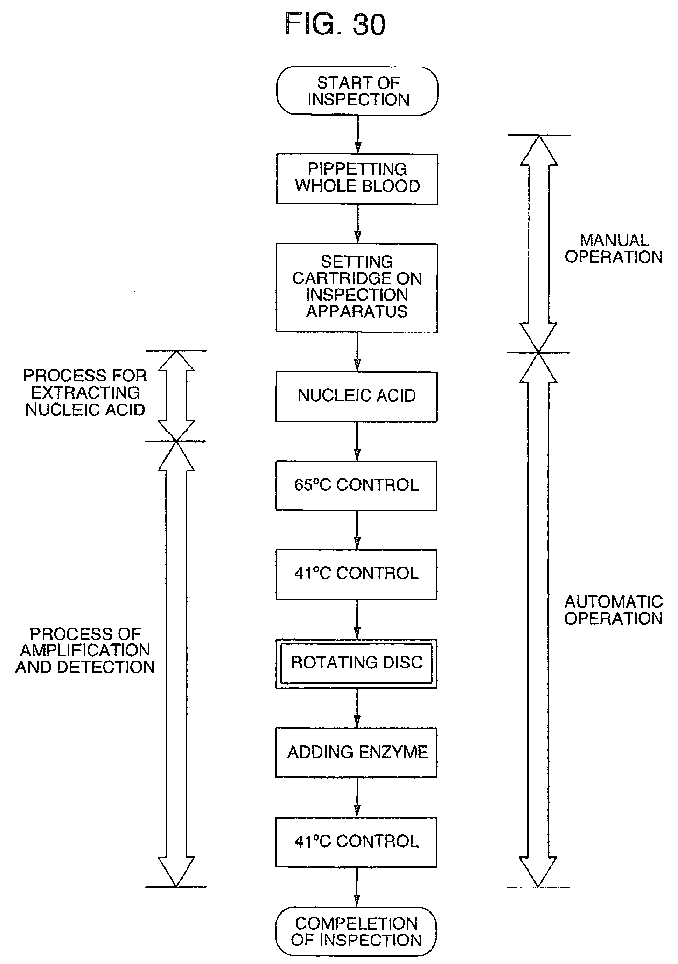

In a configuration shown in Fig. 30, which is another embodiment, a step of rotating the retaining disc 12 at a high speed is added just before addition of the enzyme among the process steps of detecting the nucleic acid in the inspection process. With this step, the frictional heating is produced between the air and the retaining disc 12 in the centrifugal tank 10, and accordingly, the temperature of the air in the centrifugal tank 10 may be raised in a short time. Further, the air in the centrifugal tank 10 is mixed due to the rotation of the retaining disc, and accordingly, there may be offered such a technical effect that the temperature distribution may be uniform.

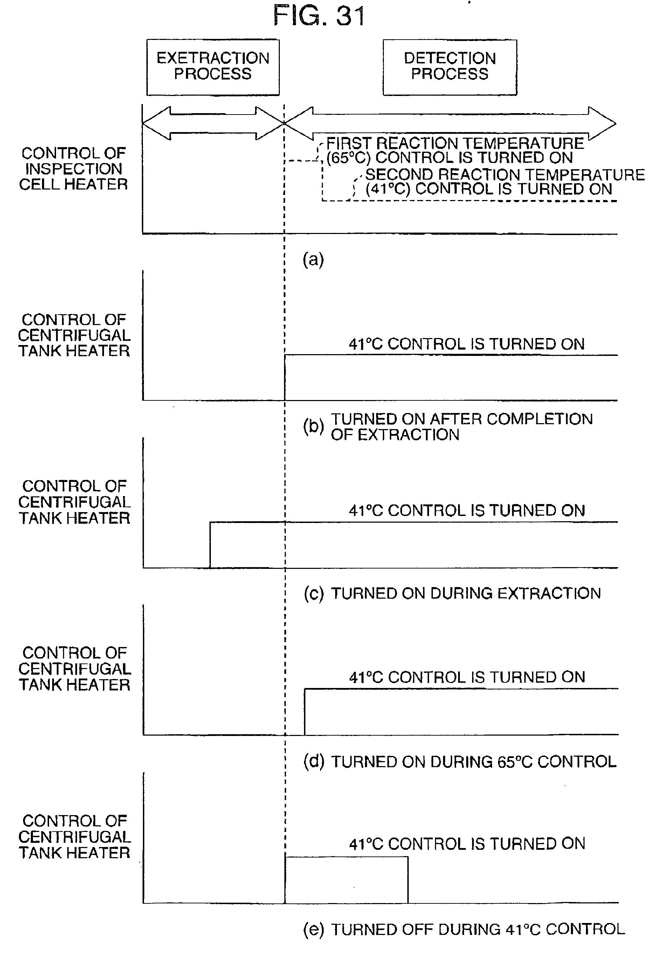

Fig. 31 shows time variations during turn-on and -off of both temperature control in the inspection port 390 and temperature control in the centrifugal tank 10. (a) indicates the temperature control of the inspection port. Simultaneously with the completion of an extraction step, the control is started so as to set a temperature of 65 deg.C as an example of the optimum temperature for the second reaction, and then set to a temperature of 41 deg.C as an example of the optimum temperature for the second reaction, about 5 to 10 minutes later. Under the condition (a), (b) to (e) show turned-on and -off of the temperature control of the centrifugal tank 10. First, (b) indicates that the temperature control of the centrifugal tank 10 is stated simultaneously with completion of the extracting step. (c) indicates that the temperature control is started during the extracting step. (d) indicates that the temperature control is started, during the detecting step after completion of the extracting step. Further, (e) indicates that the temperature control is completed intermediate of the detecting step. With this temperature control, it is possible to prevent affection caused by a high temperature in the next inspection module during the extracting step.

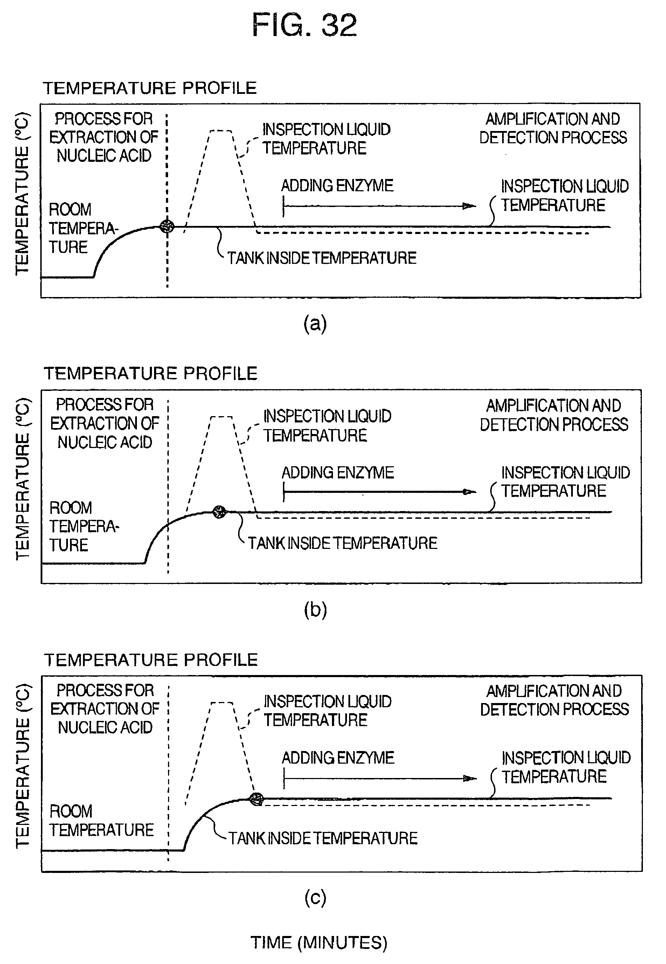

Figs. 32a to 32c shows time variations in the temperature of the inspection liquid based upon the results of the temperature control shown in Fig. 31. Fig. 32a corresponds to (c) in Fig. 31, and accordingly, the temperature control is started during the extracting step, and the temperature comes up to the second reaction temperature 41 deg.C at the time of completion of the extracting step. This temperature control may offer such a technical effect that the quantity of evaporation of the reaction liquid may be reduced during the control at the first reaction temperature of 65 deg.C. In Fig. 32b, the temperature comes to the second reaction temperature during the control of the first reaction temperature. In Fig. 32c, the temperature comes up in association with the second reaction temperature. This temperature control may offer such a technical effect that the affection by deactivation of the enzyme to be added may be minimized.

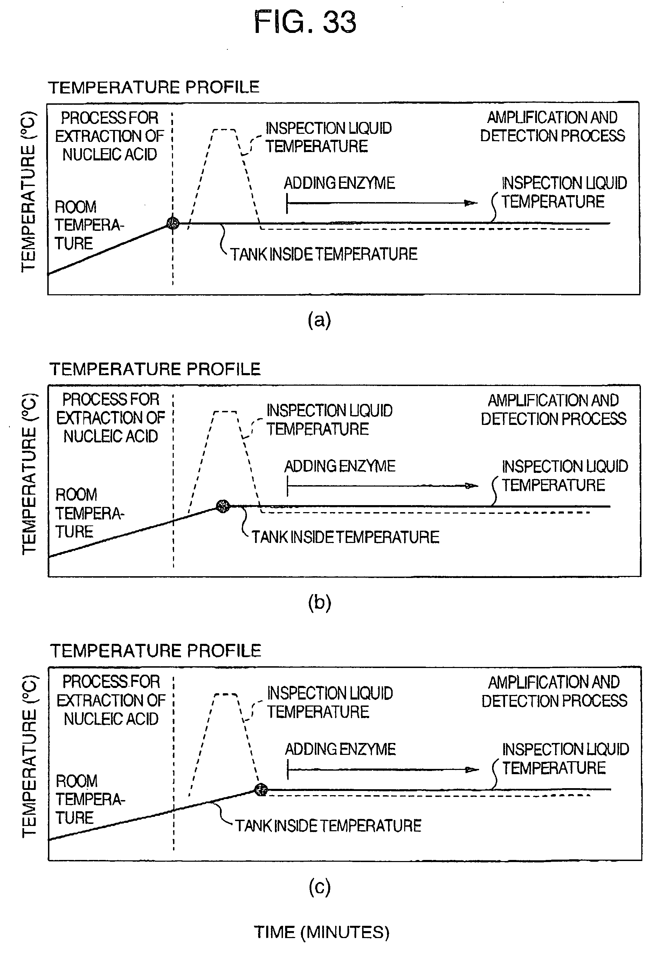

Figs. 33a to 33C show a time tendency of temperature rise of the inspection liquid in which the temperature control of the centrifugal tank is started simultaneously with the start of the extraction. In Figs. 33a to 33c, the time until the temperature becomes constant is compared. In Fig. 33a, the temperature comes to the second reaction liquid temperature between the extracting step and the detecting step. In this case, since the partial vapor pressure difference is less during the control of the first reaction temperature, the quantity of evaporation of the inspection liquid may be minimized. In Fig. 33b, the temperature comes up during the control of the first reaction liquid temperature. Further, in Fig. 33c, the temperature comes up at the time of the start of detection of the second reaction liquid temperature. In Fig. 33c, the time when the temperature is relative high is short, thereby it is possible to minimize the affection by the deactivation of the enzyme. It is noted that although the optimum enzyme temperature has been explained in this embodiment, any temperature in a range in which the enzyme may react may be used without any problem. The effects of this embodiment may be attained even at a temperature in a range from -5 deg.C of the optimum temperature, which is a lower limit value, to the optimum temperature. Further, there may be used the inspection apparatus which may be operated by inputting beforehand a temperature control width in view of an optimum enzyme temperature for every object to be inspected or every reagent to be used. In this case, it is possible to shorten the inspection time.
(1) The embodiments which have been explained hereinabove, exhibit the following configurations:
   A chemical analyzing apparatus receiving a structure in which a sample containing a biological substance, and which retains therein reagents adapted to react with the sample, and comprising a detecting mechanism for the sample after it reacts with a reagent, wherein a temperature of a fluid around the structure is controlled to an appropriate reaction temperature for the reaction reagent after or during extraction of the biological substance from the sample in the structure. Specifically, at least one of the reagents contain enzyme, and the chemical analyzing apparatus comprising a mechanism for extracting the biological substance from the sample, a mechanism for feeding the reagent containing the enzyme to the extracted biological substance, and a temperature control mechanism for controlling a temperature of the structure, is characterized in that the temperature of the reagent containing the enzyme is raised by the temperature control mechanism after a start of the step of extracting the biological substance but before the step of causing the reagent containing the enzyme to react with the extracted biological substance. The inspection module 2 (Refer to Figs. 2 and 3) may be used as the structure.
   It is characterized in that after or during the extraction of the biological substance from the sample in the structure, a temperature of a liquid around the structure is controlled to an appropriate temperature for the reaction reagent.
   The biological substance may be, for example, the nucleic acid explained in the embodiments. Alternatively, it may be DNA, RNA or protein.
(2) The chemical analyzing apparatus as stated in (1), is characterized in that the biological substance fed thereto with the enzyme is maintained at a predetermined temperature for a predetermined time, then the biological substance maintained at the predetermined temperature is controlled so as to be detected by the detecting mechanism, and at the step of increasing the temperature, the temperature of the reagent containing the enzyme is controlled so as to approach the maintained temperature.
   For example, as exemplified in the embodiments, the predetermined temperature is the maintained temperature such as an optimum temperature, which is in general higher than a room temperature. The reagent is heated up to a temperature around the maintained temperature. For example, it may be different from the maintained temperature by about 5 deg.C. The heated temperature is controlled by the temperature control mechanism so as to be nearer the maintained temperature than a room temperature. It is noted that the room temperature may be considered so as to be in a range from about 10 to 30 deg.C.
   It is preferable to set the above-mentioned temperature as an appropriate reaction temperature to a reaction temperature in a constant temperature nucleic acid amplification process to be used. The appropriate reaction temperature is preferably near an optimum temperature for enzyme, and more preferably, it is in a range from -3 to 0 deg.C around the optimum temperature of the enzyme.
(3) A chemical analyzing apparatus incorporating a drive mechanism for rotating the structure, a mechanism for extracting a biological substance from the sample, at least one of the reagents being the one which contains enzyme, a mechanism for feeding the enzyme to the extracted biological substance, a temperature control mechanism for controlling a temperature of the structure, an accommodation portion for the structure, a tank in which the accommodation portion is set, and a container accommodating the tank, and incorporating an opening and closing mechanism, is characterized by a first temperature control mechanism arranged corresponding to a zone where the structure is set, for controlling a temperature in a zone where the extracted biological substance is positioned within the structure, and a second temperature control mechanism for controlling a temperature of a fluid charged in a space in the tank. In the structure, the biological substance is caused to react with a reagent to be used for reaction under action of a centrifugal force.
   It is noted that the first temperature control mechanism may be provided to a rotary disc which is the accommodation portion for the structure. With this configuration, a specific zone of flow passages in the structure may be controlled. Alternatively, it may be arranged being opposed to the inspection module 2 in the accommodation portion, being spaced from the rotary disc. The fluid charged in the space in the tank is a gas which may be air or the like or may be a gas such as nitrogen which may restrain oxidation.
(4) The chemical analyzing apparatus as stated in (3), is characterized by such control that the second temperature control mechanism is operated so as to increase a temperature in the tank after the extraction of the biological substance is started and before the supply of the reagent containing the enzyme to the biological substance is started. It is noted that the extraction is carried out in a time range from a start of the centrifugal separation of the biological sample to the extraction of a target biological substance.
(5) The chemical analyzing apparatus as stated in (3) is characterized by such a control that the first temperature control mechanism and the second temperature control mechanism are operated to increase a temperature in the tank after the extraction of the biological substance is started but before the reagent containing the enzyme is fed to the biological substance.
(6) The chemical analyzing apparatus as stated in (3), is characterized in that the second control mechanism includes an agitating mechanism for agitating a gas in the tank.
(7) The chemical analyzing apparatus as stated in (3), is characterized in that the biological substance is nucleic acid, and that before the biological substance and the reagent containing the enzyme are mixed, A: the temperatures of the biological substance and the fluid in the tank are controlled to a value which is nearer the predetermined temperature than an outside temperature of the apparatus, or B: the temperatures of the biological substance and the reagent containing the enzyme are controlled to a value which is nearer the predetermined temperature than an outside temperature of the apparatus.

Thus, it is exhibit such an advantage that the temperature may be prevented from being lowered during mixing of the nucleic acid and the inspection liquid containing the nucleic acid from the sample, and accordingly, deactivation of the enzyme can be prevented.

Further, C: after mixing the biological substance with the reagent containing the enzyme, at least the second temperature control mechanism is operated so as to maintain under control the temperature of the reacted liquid between the biological substance and the reagent containing the enzyme and the temperature of the fluid in the tank under control. Thus, the difference in partial vapor pressure between the inspection port and the centrifugal tank may be decreased to a small value, and accordingly, it is possible to restrain the inspection liquid from being evaporated. Further, it is possible to contribute to the uniformity of the temperature of the inspection liquid so as to allow the density distribution of the inspection liquid caused by evaporation and condensation thereof to be uniform. Further, since the temperature distribution of the inspection liquid is small, it is possible to aim at enhancing the accuracy of measurement of a temperature at a temperature control position. It is noted here that at least any one of an electrical heater, a hot water circulation and a condenser in a refrigeration cycle may be used for controlling the temperature of the fluid to a reaction temperature.

In a PCR amplification process, the temperature control in which temperature variation between predetermined temperatures is repeated is carried out, as stated hereinabove. However, it is not necessary to pipette a reagent during the cycle. Meanwhile, in a Nucleic Acid Sequence-Based Amplification Process NASBA) which is a constant temperature nucleic acid amplification process, it is required to add enzyme under a predetermined temperature condition.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A chemical analyzing apparatus accommodating therein a structure (2) in which a sample containing a biological substance and which retains therein reagents adapted to react with the sample, and incorporating a detecting mechanism for the sample having reacted with the reagents, at least one of the reagents containing enzyme, **characterized by** a mechanism for extracting the biological substance from the sample, a mechanism for feeding the reagent containing the enzyme to the extracted biological sample, and a temperature control mechanism (16) for controlling a temperature of the structure, wherein a temperature of the reagent containing the enzyme is increased under control by the temperature control mechanism (16) after the extraction of the biological substance but before the reaction by the reagent containing the enzyme.

2. A chemical analyzing apparatus as set forth in claim 1, **characterized by** carrying out such control that the biological substance fed thereto with the reagent containing the enzyme is maintained and amplified at a predetermined temperature for a predetermined time, then the biological substance thus maintained at the predetermined temperature is detected by the detecting mechanism, and a temperature of the reagent containing the enzyme is caused to approach the maintained predetermined temperature during increasing the temperature.

3. A chemical analyzing apparatus accommodating therein a structure in which a sample containing a biological substance is introduced and which retains therein reagents adapted to react with the sample, and incorporating a detecting mechanism for the sample having reacted with the reagents, **characterized by** a drive mechanism (11) for rotating the structure, a mechanism for extracting a biological substance from the sample, at least one of the reagents containing enzyme, a mechanism for feeding the reagent containing the enzyme to the extracted biological substance, a temperature control mechanism for controlling a temperature of the structure, an accommodating portion for the structure, a tank (10) in which the accommodating portion is set, a container accommodating the tank and incorporating an opening and closing mechanism, a first temperature control mechanism (16) set corresponding to a zone where the structure is accommodated, for controlling a temperature in a zone where the extracted biological substance is present in the structure, and a second temperature control mechanism (18) for controlling a temperature of a fluid filled in a space in the tank.

4. A chemical analyzing apparatus a set forth in claim 3, **characterized by** such control that the second temperature control mechanism (18) is operated so as to increase a temperature in the tank after the extraction of the biological substance is started but before the reagent containing the enzyme is fed to the biological substance.

5. A chemical analyzing apparatus as set forth in claim 3 or 4, **characterized by** such control that the first temperature control mechanism (16) and the second temperature control mechanism (18) are operated so as to increase a temperature in the tank after the extraction of the biological substance is started but before the reagent containing the enzyme is fed to the biological substance.

6. A chemical analyzing apparatus as set forth in any of claims 3 to 5, **characterized in that** the second temperature control mechanism comprises an agitating mechanism for agitating a gas in the tank.

7. A chemical analyzing apparatus as set forth in any of claims 3 to 6, **characterized in that** the biological substance is nucleic acid, and the temperatures of the biological substance and the fluid in the tank are controlled to a value which is nearer a predetermined temperature than that outside of the apparatus, before the biological substance and the reagent containing the enzyme are mixed to each other.

8. A chemical analyzing apparatus as set forth in any of claims 3 to 7, **characterized in that** the biological substance is nucleic acid, and the temperatures of the biological substance and the reagent containing the enzyme are controlled to a value which is nearer a predetermined temperature than that outside of the apparatus, before the biological substance and the reagent containing the enzyme are mixed to each other.

9. A chemical analyzing apparatus as set forth in claim 3, **characterized in that** the biological substance is nucleic acid, and the temperatures of the biological substance, the reagent containing the enzyme and the fluid in the tank are controlled so as to be maintained by operating at least the second temperature control mechanism after the biological substance and the reagent containing the enzyme are mixed to each other.

10. A chemical analyzing apparatus as set forth in claim 3, wherein the biological substance is nucleic acid.
